(19) Europäisches Patentamt

European Patent Office

Office européen des brevets

(11) **EP 1 482 499 A1**

(12) **EUROPEAN PATENT APPLICATION**

(43) Date of publication:
01.12.2004 Bulletin 2004/49

(51) Int Cl.$^7$: **G11B 20/10**

(21) Application number: **03012404.4**

(22) Date of filing: **30.05.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Timmermann, Friedrich**<br>  **30823 Garbsen (DE)**<br>• **Theis, Oliver**<br>  **32689 Kalletal (DE)** |
| (71) Applicant: **DEUTSCHE THOMSON-BRANDT GMBH**<br>**78048 Villingen-Schwenningen (DE)** | (74) Representative: **Thies, Stephan et al**<br>**Deutsche Thomson-Brandt GmbH,**<br>**European Patent Operations,**<br>**Karl-Wiechert-Allee 74**<br>**30625 Hannover (DE)** |

(54)    **A method for determining an asymmetry of a recording on an optical medium**

(57)    The present invention provides for a method of determining an asymmetry of a recording on an optical recording medium by measuring a mean signal value of the recorded signal and multiplying the mean signal by a constant. The multiplication of the mean signal value by the constant provides the asymmetry value without the need for identification of a certain pattern of repeating runs of marks and spaces.

Fig. 5

EP 1 482 499 A1

Printed by Jouve, 75001 PARIS (FR)

## Description

The present invention relates to the field of optical recording, and more particularly, without limitation, to the blu-ray disc.

There is a variety of optical recording media with different data capacities, such as CDs and DVDs. In order to increase the capacity of a recording medium with a certain fixed diameter, the track pitch and the channel bit length have to be reduced, which requires a reduction of the laser spot size, i.e. a reduction of the used laser wavelength. Currently, disc recording systems are under development which use blue laser diodes with a wavelength of 405nm.

For example, there is an emerging standard for a high capacity optical disc recording format which utilises blue-violet laser light and which is called 'blu-ray disc', or "BD" disc. A copy of the blu-ray disc standard can be obtained from Royal Philips Electronics, Intellectual Property and Standards, Eindhoven, The Netherlands.

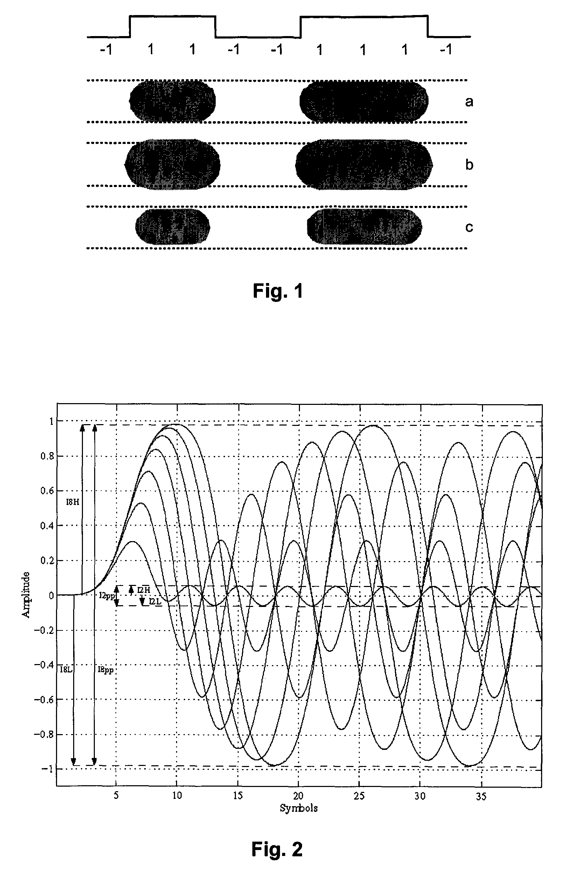

One of the problems associated with optical recording is asymmetry which is caused by domain bloom. Domain bloom is illustrated in figure 1. Figure 1 schematically shows three data tracks a, b and c, where data track a has been recorded with ideal laser power (asm = 0), data track b has been recorded with excess laser power resulting in over-etching (asm > 0) and data track c has been recorded with insufficient laser power resulting in under-etching (asm < 0).

Domain bloom is the result of under- or over-etching during the recording process. Deviation from ideal laser power causes marks to become systematically too short or too long.

Asymmetry is generally defined as:

$$asm = \frac{\dfrac{I_{MaxH} + I_{MaxL}}{2} - \dfrac{I_{MinH} + I_{MinL}}{2}}{I_{Maxpp}} \qquad (1)$$

$I_{MaxH}$ and $L_{MaxL}$ represent the amplitude of the longest run of spaces (High) and marks (Low). Respectively, $I_{MinH}$ and $I_{MinL}$ represent the shortest run. Figure 2 as an example depicts the RF signal amplitude of repeating runs of marks and spaces with duration from 2T to 8T (17pp modulation) of a disc without domain bloom against the number of symbols. T designates the symbol spacing. The signals are balanced to zero. For reliable data reproduction asm shall meet the following requirements:

$$- \text{lower limit} < asm < + \text{upper limit} \qquad (2)$$

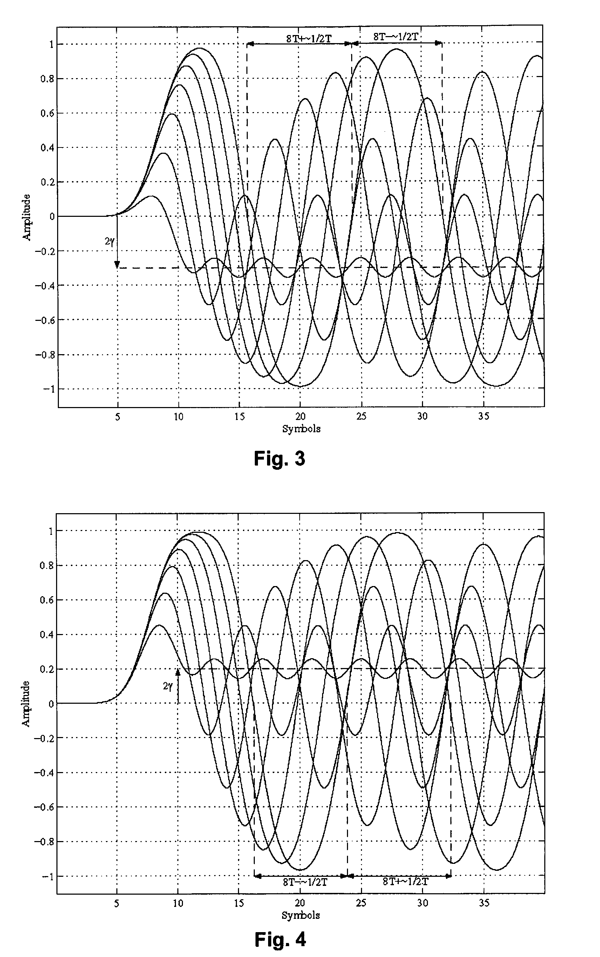

For example, for DVD+RW the relation (2) is given by $-0,15 \leq asm \leq 0,10$. Figures 3 and 4 show the situation where asm reaches the upper and lower limits. Domain bloom manifests itself as a DC-offset within the RF signal, especially affecting the shorter run lengths. The 2T signal is shifted to $\approx -2asm$ whereas the 8T signal seems nearly unaffected. Although the amplitude of the 8T remains nearly unchanged, the shape of the wave gets detracted. Maximum over-etching within the standard boundary (asm = +upper limit) results in the prolongation of the negative half of the wave by $\approx T/2$. Similarly the positive half gets contracted by the same amount. The sinusoidal waveform of the 2Ts is preserved. Overall the waveform distribution around zero-DC is asymmetric.

The determination of asm in accordance with above equation (1) requires an identification of the corresponding runs of marks and spaces in the recorded signal.

The present invention aims to provide an improved method of determining an asymmetry value and a corresponding computer program product and recorder.

The present invention provides for a method for determining an asymmetry of a recording on an optical recording medium by measuring a mean signal value of the recorded signal and multiplying the mean signal by a constant. The multiplication of the mean signal value by the constant provides the asymmetry value without the need for identification of a certain pattern of repeating runs of marks and spaces as it is required in the prior art.

The present invention is based on the discovery that the asymmetry value can be obtained by means of a simple multiplication of the mean signal value by a constant, whereby the constant depends on the probability distribution of the run length of the recorded signal. For example, if the signal has been recorded and coded in accordance with the blu-ray disc standard the constant is approximately -1/1,17. For other coding schemes, which are used for example for DVD+RW, different constants might apply.

The asymmetry value can be used for asymmetry compensation in the read path in order to decrease the bit error rate. Further, the asymmetry can be used for optical power control of the write laser power in order to maintain the asymmetry value within the allowed tolerance range at all times.

A further application is timing recovery. Since zero crossings get shifted in asymmetric signals a measure of asymmetry can be used to improve clock recovery.

In the following preferred embodiments of the invention will be described in greater detail by making reference to the drawings in which:

Figure 1 schematically shows a number of tracks which are recorded on an optical medium,

Figure 2 is illustrative of an idealised optical channel without domain bloom,

Figure 3 is illustrative of an idealised optical channel with over-etched marks,

Figure 4 is illustrative of an idealised optical channel with under-etched marks,

Figure 5 is illustrative of a preferred embodiment of a method of the invention,

Figure 6 shows a block diagram of an embodiment of an optical recorder.

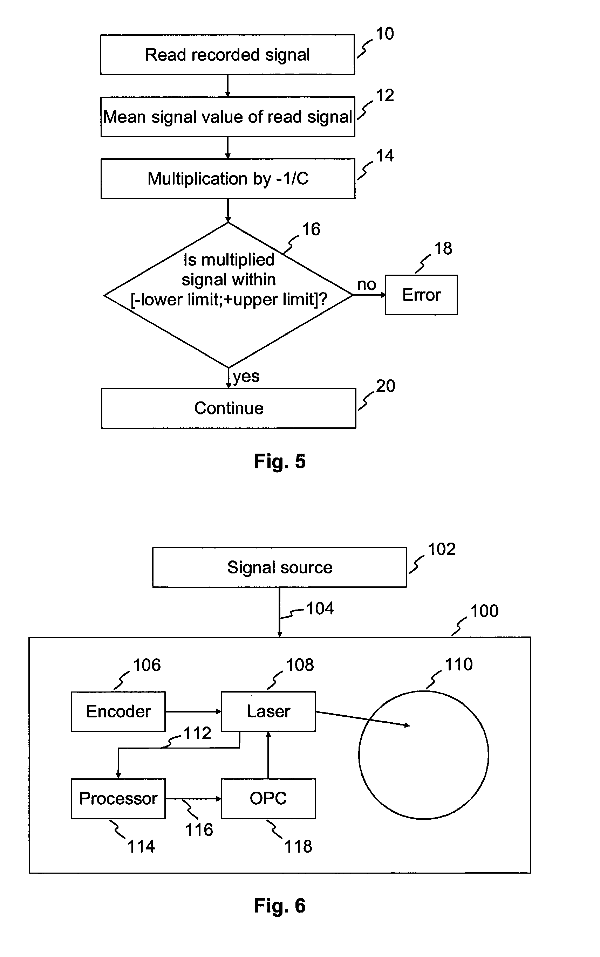

Figure 5 shows a flow diagram to illustrate the determination of an asymmetry value asm. In step 10 a signal is read from an optical recording medium. For example, the optical recording medium is a blu-ray disc. Further it is assumed, without restriction of generality, that the signal has been encoded and recorded on the optical medium in accordance with the blu-ray disc standard. This means that a run length limited code RLL (1,7)pp has been used for the recording. Such a run length limited code has a predefined probability distribution of the run lengths.

In step 12 a mean signal value is determined for the read signal. For example this can be done by a moving average process.

In step 14 the mean signal value is multiplied by -1/C. In case of RLL (1,7)pp C is approximately 1,17.

In step 16 it is checked whether the multiplied mean signal value is within the allowed tolerance range between -lower limit and +upper limit.

If this is not the case an error signal is provided in step 18. Alternatively the process continues in step 20.

As an alternative for generating an error signal on the basis of the asymmetry value a control signal can be generated in order to control the laser power of the write laser beam. This is further illustrated by making reference to figure 6.

Figure 6 shows a block diagram of a recorder 100 which is coupled to a signal source 102. The signal source 102 delivers a signal 104 to the recorder 100.

The recorder 100 has an encoder 106 for encoding the signal 104 by means of a run length limited code. By means of a laser 108 the encoded signal is written to an optical recording medium 110.

After the recording of a data track on the optical recording medium 110, the same data track is read by the laser 108. The laser 108 provides a read signal 112 which is inputted into a processor 114. The processor 114 calculates a moving average value of the read signal 112. The average value is multiplied by a constant, such as -1/1,17 in the case of the blu-ray disc standard. The multiplied and averaged signal 116 is inputted into an optical power control (OPC) module 118 as a control signal. On the basis of the signal 116 the OPC module 118 controls the laser power of the laser 108 such that the resulting asymmetry always remains within the allowed tolerance range.

## Claims

1. A method of determining an asymmetry of a recording on an optical recording medium, the method comprising the steps of:

   - measuring a mean signal value of the recorded signal,

   - multiplying the mean signal value by a constant.

2. The method of claim 1, whereby the recorded signal is run length coded and whereby the constant depends on a predetermined probability distribution of the run lengths.

3. The method of claim 1 or 2, whereby the signal is coded in accordance with the blu-ray disc standard and the constant is approximately -1/1,17.

4. The method of claims 1, 2 or 3, further comprising checking if the asymmetry is within an allowed range.

5. The method of any one of the preceding claims 1 to 4, further comprising using the asymmetry for optical power control of a write laser beam.

6. A computer program product for performing a method of determining an asymmetry of a recording on an optical medium, comprising program means for entering of a mean signal value of the recorded signal and for multiplying of the mean signal by a constant to provide an asymmetry value of the recording.

7. An apparatus for reading from and/or writing to optical recording media, the apparatus comprising:

   - means (108) for measuring a mean signal value of a signal which has been recorded on the optical disc (110),

   - means (114) for multiplying of the mean signal value by a constant to provide an asymmetry value of the recording.

8. The apparatus of claim 7, the constant being approximately - 1/1,17.

9. The apparatus of claims 7 or 8, further comprising

**EP 1 482 499 A1**

means (118) for optical power control, whereby the means for optical power control receive the multiplied mean signal as a control signal.

**Fig. 1**

**Fig. 2**

**Fig. 3**

**Fig. 4**

Read recorded signal — 10

↓

Mean signal value of read signal — 12

↓

Multiplication by -1/C — 14

↓

Is multiplied signal within [-lower limit;+upper limit]? — 16

no → Error — 18

↓ yes

Continue — 20

**Fig. 5**

Signal source — 102

↓ — 104

100

Encoder — 106 → Laser — 108 → ◯ — 110

— 112

Processor — 114 → OPC — 118

— 116

**Fig. 6**

**European Patent Office**

**EUROPEAN SEARCH REPORT**

Application Number

EP 03 01 2404

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DERRAS B: "Decision-directed adaptive nonlinear canceller for optical read channels" IEEE TRANSACTIONS ON CONSUMER ELECTRONICS, IEEE INC. NEW YORK, US, vol. 47, no. 3, August 2001 (2001-08), pages 520-527, XP002186350 ISSN: 0098-3063 | 1,6,7 | G11B20/10 |
| Y | * page 520 - page 522; figures 6-8 * | 2,4,5,9 | |
| Y | POZIDIS H ET AL: "C simple nonlinear model for the optical recording channel" ICC 2000. 2000 IEEE INTERNATIONAL CONFERENCE ON COMMUNICATIONS. CONFERENCE RECORD. NEW ORLEANS, LA, JUNE 18-21, 2000, IEEE INTERNATIONAL CONFERENCE ON COMMUNICATIONS, NEW YORK, NY: IEEE, US, vol. 1 OF 3, 18 June 2000 (2000-06-18), pages 99-103, XP002186351 ISBN: 0-7803-6284-5 * the whole document * | 2,4,5,9 | |
| A | SEOK JUN KO ET AL: "A robust digital timing recovery with asymmetry compensator for high speed optical drive systems" IEEE TRANSACTIONS ON CONSUMER ELECTRONICS, IEEE INC. NEW YORK, US, vol. 47, no. 4, 20 August 2001 (2001-08-20), pages 821-830, XP002237635 ISSN: 0098-3063 * the whole document * | 1-9 | TECHNICAL FIELDS SEARCHED (Int.Cl.7) G11B |

-/--

The present search report has been drawn up for all claims

| Place of search | Date of completion of the search | Examiner |
|---|---|---|
| THE HAGUE | 13 November 2003 | Ogor, M |

European Patent
Office

**EUROPEAN SEARCH REPORT**

Application Number

EP 03 01 2404

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | ECMA: STANDARDIZING INFORMATION AND COMMUNICATION SYSTEMS: "Standard ECMA-267, 3nd edition: 120 mm DVD - Read-Only Disk" STANDARD ECMA-267, XX, XX, no. 272, April 2001 (2001-04), pages 1-86, XP002186785 ----- | | |

TECHNICAL FIELDS
SEARCHED      (Int.Cl.7)

The present search report has been drawn up for all claims

| Place of search | Date of completion of the search | Examiner |
|---|---|---|
| THE HAGUE | 13 November 2003 | Ogor, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)